# NEUE EUROPÄISCHE PATENTSCHRIFT

(11) **EP 2 842 860 B2**
(45) Veröffentlichungstag und Bekanntmachung des Hinweises auf die Entscheidung über den Einspruch: **27.07.2022**
(45) Hinweis auf die Patenterteilung: 15.05.2019
(21) Anmeldenummer: 14002901.8
(22) Anmeldetag: 21.08.2014
(51) Int. Cl.: B62M 25/04, B62K 23/06

(54) **Halte- und Freigabemechanik zum Halten und Freigeben einer Seilaufnahmevorrichtung**
Holding and release mechanism for holding and releasing a rope pick-up device
Mécanique de retenue et de desserrage d'un dispositif de logement de câble

(30) Priorität: 26.08.2013 DE 102013216932
(43) Veröffentlichungstag der Anmeldung: 04.03.2015
(60) Teilanmeldung: 19000235.2
(73) Patentinhaber: SRAM Deutschland GmbH, 97424 Schweinfurt (DE)
(72) Erfinder: Weiss, Martin, 97424 Schweinfurt (DE)
(74) Vertreter: Jordan, Volker Otto Wilhelm

(56) Entgegenhaltungen:
- EP-A1- 0 552 775
- EP-A2- 0 785 128
- EP-A2- 0 785 128
- EP-A2- 0 849 157
- EP-A2- 0 849 157
- EP-A2- 1 440 878
- EP-B1- 1 935 777
- WO-A1-00/59774
- US-A- 5 241 878
- US-A1- 2003 126 940
- US-B2- 8 272 293
- Auszug aus dem Duden Seite 1069
- Auszug aus dem Internet von DWDS

## Beschreibung

Die Erfindung betrifft einen Halte- und Freigabemechanik zum Halten und Freigeben einer Seilaufnahmevorrichtung etwa eines Schrittschalters, sowie einen Schrittschalter umfassend diese Halte- und Freigabemechanik, sowie ein System, welches wiederum diesen Schrittschalter umfasst.

Schrittschalter, in welchem eine erfindungsgemäße Halte- und Freigabemechanik zum Einsatz kommen kann, werden insbesondere bei Fahrrädern verwendet. Mit ihrer Hilfe kann der Benutzer des Fahrrads den Schalterzug schrittweise aufwickeln und freigeben, wobei die Betätigungshebel in der Regel nach ihrer Betätigung wieder in ihre Ausgangslage zurückkehren. Häufig wird in diesem Zusammenhang auch der Begriff Trigger-Schalter synonym für einen Schrittschalter verwendet.

Schritt- bzw. Trigger-Schalter sind unter anderem aus den Patentschriften EP 0 361 335 B1, EP 1 232 940 B2, EP 1 366 981 B1 und FR 2 701 917 A1 bekannt.

Die bekannten Schrittschalter umfassen jeweils einen Seilaufzieh- bzw. Aufwickelmechanismus für den Schaltzug, sowie einen Mechanismus zum Halten bzw. Freigeben des Schaltzugs. Die vorliegende Erfindung bezieht sich auf eine besonders vorteilhafte Ausführung einer Halte- und Freigabemechanik, sowie einen Schrittschalter in dem diese Halte- und Freigabemechanik verwendet wird, sowie ein Schaltsystem, in dem wiederum dieser Schrittschalter verwendet wird.

Die Halte- bzw. Freigabevorrichtung der EP 0 361 335 B1 umfasst erste und zweite Sperrelemente, welche gegeneinander verschwenkbar sind, um wechselweise in eine mit Zähnen bestückte Rastscheibe einzugreifen. Bei einem Freigabevorgang wird jeweils das momentan in Eingriff mit der Rastscheibe befindliche Sperrerelement aus dem Eingriff mit der Rastscheibe herausbewegt. Die Rastscheibe kann sich nun soweit verdrehen, bis das jeweils andere Sperrelement in die Rastverzahnung eingreift. Bei der Rückkehr des Freigabehebels in seine Ausgangsstellung bewegt sich das zweite Sperrelement aus dem Eingriff der Rastscheibe heraus, und die Rastscheibe bewegt sich soweit, bis es zum erneuten Eingriff des ersten Sperrelements mit ihr kommt.

Eine Halte- und Freigabemechanik nach dem Oberbegriff von Anspruch 1 ist aus der EP 1 232 940 B2 bekannt. Eine schwenkbare Arretierklinke greift hier mit ihrem Arretiervorsprung zunächst mit einem ersten Zahn einer Rastscheibe ein, wodurch die Rastscheibe festgesetzt wird. Wird nun der Arretiervorsprung aus dem Eingriffsbereich des ersten Zahns herausgeschwenkt, so kann sich die Rastscheibe soweit drehen, bis ein zum ersten Zahn benachbarter Zahn der Rastscheibe mit einem gleichzeitig in den Eingriffsbereich der Zähne hinein geschwenkten Sicherungsvorsprung der Klinke in Eingriff kommt. Wird die Arretierklinke nun in ihre Ausgangsstellung zurückgeschwenkt, so kann die Rastzahnscheibe sich soweit weiter drehen, bis der Arretiervorsprung der Arretierklinke mit einem wiederum dem ersten Zahn benachbarten dritten Zahn in Eingriff kommt und die Rastzahnscheibe erneut festsitzt.

Eine weitere Halte- und Freigabemechanik nach dem Oberbegriff von Anspruch 1 ist aus der EP 1 366 981 B1 bekannt, bei welcher eine gleitbar gelagerte Arretierklinke abwechselnd mit auf gegenüberliegenden Seiten einer Rastzahnscheibe angeordneten Arretier- bzw. Sicherungszähnen eingreift, wenn ein Freigabehebel betätigt wird.

Aus der FR 2 701 917 A1 ist schließlich ebenfalls eine Halte- und Freigabemechanik nach dem Oberbegriff von Anspruch 1 bekannt, bei welcher eine Arretierklinke zunächst mittels eines Arretiervorsprungs mit einem Arretierzahn in Eingriff steht. Auf Betätigung eines Freigabehebels hin schwenkt die Arretierklinke nun derart, dass der Arretiervorsprung aus dem Eingriff mit dem Arretierzahn heraustritt, worauf hin ein Sicherungsvorsprung der Klinke mit einem Sicherungszahn in Eingriff tritt, während dessen sich die Rastzahnscheibe um einen bestimmten Winkelbetrag gedreht hat. Beim Zurückschwenken der Arretierklinke tritt nun erneut ihr Arretiervorsprung mit einem Arretierzahn in Eingriff. Dokument EP 1 440 878 A2 wird als der nächste Stand der Technik angesehen und offenbart eine Halte- und Freigabemechanik nach dem Oberbegriff von Anspruch 1.

Es ist nun im Hinblick auf die bekannten Halte- und Freigabemechaniken für Schrittschalter die Aufgabe der vorliegenden Erfindung, eine solche Halte- und Freigabemechanik bereitzustellen, die eine besonders kompakte und raumsparende Bauweise erlaubt. Insbesondere ist es die Aufgabe der vorliegenden Erfindung, eine Halte- und Freigabemechanik bereitzustellen, welche durch ihre Bauweise eine besonders große Zahl von Betätigungsstellungen (Gängen) erlaubt. Ferner ist es eine Aufgabe der vorliegenden Erfindung, eine zuverlässig funktionierende Halt- und Freigabemechanik bereitzustellen. Ferner ist es eine Aufgabe der vorliegenden Erfindung, eine Halte- und Freigabemechanik bereitzustellen, die für das diese umfassende Gesamtsystem eine einfache Justierbarkeit ermöglicht.

Die Aufgabe wird gelöst durch die Merkmale von Anspruch 1.

Erfindungsgemäß ist vorgesehen, dass die Mehrzahl von Zähnen der Zahnscheibenanordnung eine erste Gruppe von Zähnen und eine zweite Gruppe von Zähnen aufweist, wobei die Zähne der ersten Gruppe von Zähnen als Arretierzähne dienen und in einer zur ersten Achse orthogonalen ersten Zahnebene angeordnet sind und die Zähne der zweiten Gruppe von Zähnen als Sicherungzähne dienen und in einer zur ersten Achse orthogonalen, gegenüber der ersten Zahnebene versetzten zweiten Zahnebene angeordnet sind. Hierdurch steht ein besonders großer Winkelbereich der Zahnscheibenanordnung zur Anordnung der jeweiligen Gruppen von Zähnen zur Verfügung, was die eine raumsparende Gestaltung der Halte- und Freigabemechanik und insbesondere eine große Anzahl von Betätigungsstellungen erlaubt.

In einer erfindungsgemäßen Halte- und Freigabemechanik kann die erste Gruppe von Zähnen die gleiche Anzahl von Zähnen aufweisen wie die zweite Gruppe von Zähnen, wobei diese Anzahl vorzugsweise der Anzahl von Betätigungsstellungen des Betätigungsseils entsprechen kann.

Ferner kann es im Hinblick auf geometrische Gestaltung der Halte- und Freigabemechanik vorteilhaft sein, die Arretierklinke derart auszugestalten, dass der Arretiervorsprung in der ersten Zahnebene und der Sicherungsvorsprung in der zweiten Zahnebene angeordnet sind.

Vorteilhafterweise kann man vorsehen, dass die Zähne der ersten Gruppe von Zähnen sich über einen ersten Winkelbereich in Bezug auf die erste Drehachse erstrecken, und die Zähne der zweiten Gruppe von Zähnen sich über einen, sich mit dem ersten Winkelbereich überlappenden, zweiten Winkelbereich in Bezug auf die erste Drehachse erstrecken.

Die Zahnscheibenanordnung kann derart gefertigt sein, dass sie zwei drehfest miteinander verbundene Zahnscheiben umfasst, von denen die eine die erste Gruppe von Zähnen und die andere die zweite Gruppe von Zähnen aufweist. Dies erlaubt eine vereinfachte und kostengünstige Herstellung der Zahnscheibenanordnung. Alternativ ist es selbstverständlich auch möglich, die Zahnscheibenanordnung mit ihren beiden Zahnebenen einteilig herzustellen.

Zur Lösung wenigstens einer der Aufgaben wird nach einem zweiten Aspekt bereitgestellt eine Halte- und Freigabemechanik zum Halten und Freigeben einer Seilaufnahmevorrichtung etwa eines Schrittschalters, zum Halten eines mittels der Seilaufnahmevorrichtung aufnehmbaren Betätigungsseils in einer Mehrzahl von Betätigungsstellungen, umfassend eine Betätigungsstellung maximalen Auszugs des Betätigungsseils von der Seilaufnahmevorrichtung und eine Betätigungsstellung maximalen Einzugs des Betätigungsseils durch die Seilaufnahmevorrichtung, und zum schrittweisen Freigeben des Betätigungsseils in einer Auszugsrichtung, umfassend eine der Seilaufnahmevorrichtung einteilig zugehörige oder drehfest damit verbundene oder verbindbare, mit dieser um eine erste Achse verdrehbare Zahnscheibenanordnung, welche an ihrem Außenumfang eine Mehrzahl von Zähnen aufweist; eine verstellbare, vorzugsweise um eine zweite Achse schwenkbare Arretierklinke, welche in einer ersten Stellung, insbesondere einer ersten Schwenkstellung, bei in verschiedenen ersten Drehstellungen befindlicher Zahnscheibenanordnung mit einem Arretiervorsprung mit einem der jeweiligen ersten Drehstellung zugeordneten, als Arretierzahn dienenden Zahn der Mehrzahl von Zähnen eingreift, um die Zahnscheibenanordnung und damit die Seilaufnahmevorrichtung in der jeweiligen ersten Drehstellung zu halten oder anzuhalten, und welche in einer zweiten Stellung, insbesondere einer zweiten Schwenkstellung, bei in verschiedenen zweiten Drehstellungen befindlicher Zahnscheibenanordnung mit einem Sicherungsvorsprung mit einem der jeweiligen zweiten Drehstellung zugeordneten, als Sicherungszahn dienenden Zahn der Mehrzahl von Zähnen eingreift, um die Zahnscheibenanordnung und damit die Seilaufnahmevorrichtung in der jeweiligen zweiten Drehstellung zu halten oder anzuhalten, wobei die ersten Drehstellungen den Betätigungsstellungen des Betätigungsseils oder einer Untermenge dieser Betätigungsstellungen entsprechen und die zweiten Drehstellungen Zwischenstellungen des Betätigungsseils bei der Überführung des Betätigungsseil zwischen benachbarten der Betätigungsstellungen durch Freigeben des Betätigungsseils entsprechen.

Erfindungsgemäß ist vorgesehen, dass der Betätigungsstellung maximalen Auszugs des Betätigungsseils kein als Arretierzahn dienender Zahn der Mehrzahl von Zähnen zugeordnet ist, so dass die Zahnscheibenanordnung in einer der Betätigungsstellung maximalen Auszugs des Betätigungsseils entsprechenden Drehstellung der Zahnscheibenanordnung und damit der Seilaufnahmevorrichtung nicht durch Eingriff des Arretiervorsprungs mit einem Zahn angehalten und gehalten wird. Hierdurch wird ermöglicht, die Betätigungsstellung maximalen Auszugs des Betätigungsseils unabhängig von der Halte- und Freigabemechanik innerhalb eines gewissen Bereichs fein zu justieren. Hierbei können die ersten und zweiten Gruppen von Zähnen wie oben geschildert in zwei beabstandeten Ebenen angeordnet sein, erfindungsgemäß können sie jedoch auch in der selben Ebene liegen. Beide möglichen Anordnungen der Zähne erlauben eine flexible Gestaltung der Zahnscheibenanordnung und damit eine vorteilhaft kompakte Halte- und Freigabemechanik.

Zur Lösung wenigstens einer der Aufgaben wird nach einem dritten Aspekt bereitgestellt eine Halte- und Freigabemechanik zum Halten und Freigeben einer Seilaufnahmevorrichtung etwa eines Schrittschalters, zum Halten eines mittels der Seilaufnahmevorrichtung aufnehmbaren Betätigungsseils in einer Mehrzahl von Betätigungsstellungen, umfassend eine Betätigungsstellung maximalen Auszugs des Betätigungsseils von der Seilaufnahmevorrichtung und eine Betätigungsstellung maximalen Einzugs des Betätigungsseils durch die Seilaufnahmevorrichtung, und zum schrittweisen Freigeben des Betätigungsseils in einer Auszugsrichtung, umfassend eine der Seilaufnahmevorrichtung einteilig zugehörige oder drehfest damit verbundene oder verbindbare, mit dieser um eine erste Achse verdrehbare Zahnscheibenanordnung, welche an ihrem Außenumfang eine Mehrzahl von Zähnen aufweist; eine verstellbare, vorzugsweise um eine zweite Achse schwenkbare Arretierklinke, welche in einer ersten Stellung, insbesondere einer ersten Schwenkstellung, bei in verschiedenen ersten Drehstellungen befindlicher Zahnscheibenanordnung mit einem Arretiervorsprung mit einem der jeweiligen ersten Drehstellung zugeordneten, als Arretierzahn dienenden Zahn der Mehrzahl von Zähnen eingreift, um die Zahnscheibenanordnung und damit die Seilaufnahmevorrichtung in der jeweiligen ersten Drehstellung zu halten oder anzuhalten, und welche in einer zweiten Stellung, insbesondere einer zweiten Schwenkstellung, bei in verschiedenen zweiten Drehstellungen befindlicher Zahnscheibenanordnung mit einem Sicherungsvorsprung mit einem der jeweiligen zweiten Drehstellung zugeordneten, als Sicherungszahn dienenden Zahn der Mehrzahl von Zähnen eingreift, um die Zahnscheibenanordnung und damit die Seilaufnahmevorrichtung in der jeweiligen zweiten Drehstellung zu halten oder anzuhalten, wobei die ersten Drehstellungen den Betätigungsstellungen des Betätigungsseils oder einer Untermenge dieser Betätigungsstellungen entsprechen und die zweiten Drehstellungen Zwischenstellungen des Betätigungsseils bei der Überführung des Betätigungsseil zwischen benachbarten der Betätigungsstellungen durch Freigeben des Betätigungsseils entsprechen.

Erfindungsgemäß ist vorgesehen, dass die Zahnscheibenanordnung und damit die Seilaufnahmevorrichtung von einer Drehstellung, die einer der Betätigungsstellung maximalen Auszugs des Betätigungsseils vorausgehenden Betätigungsstellung des Betätigungsseils entspricht, unmittelbar in eine/die der Betätigungsstellung maximalen Auszugs des Betätigungsseils entsprechende Drehstellung der Zahnscheibenanordnung und damit der Seilaufnahmevorrichtung durch Freigeben des Betätigungsseils überführbar ist, ohne Anhalten der Zahnscheibenanordnung und damit der Seilaufnahmevorrichtung vermittels des Sicherungsvorsprungs und eines als Sicherungszahn dienenden Zahns der Mehrzahl von Zähnen an einer Zwischenstellung. Da in einer solchen Halte- und Freigabemechanik die Zahl der Arretier- oder/und Sicherungszähne verringert werden kann, kann sie besonders kompakt gestaltet werden.

Zur Lösung wenigstens einer der Aufgaben wird nach einem vierten Aspekt bereitgestellt eine Halte- und Freigabemechanik zum Halten und Freigeben einer Seilaufnahmevorrichtung etwa eines Schrittschalters, zum Halten eines mittels der Seilaufnahmevorrichtung aufnehmbaren Betätigungsseils in einer Mehrzahl von Betätigungsstellungen, umfassend eine Betätigungsstellung maximalen Auszugs des Betätigungsseils von der Seilaufnahmevorrichtung und eine Betätigungsstellung maximalen Einzugs des Betätigungsseils durch die Seilaufnahmevorrichtung, und zum schrittweisen Freigeben des Betätigungsseils in einer Auszugsrichtung, umfassend eine der Seilaufnahmevorrichtung einteilig zugehörige oder drehfest damit verbundene oder verbindbare, mit dieser um eine erste Achse verdrehbare Zahnscheibenanordnung, welche an ihrem Außenumfang eine Mehrzahl von Zähnen aufweist; eine verstellbare, vorzugsweise um eine zweite Achse schwenkbare Arretierklinke, welche in einer ersten Stellung, insbesondere einer ersten Schwenkstellung, bei in verschiedenen ersten Drehstellungen befindlicher Zahnscheibenanordnung mit einem Arretiervorsprung mit einem der jeweiligen ersten Drehstellung zugeordneten, als Arretierzahn dienenden Zahn der Mehrzahl von Zähnen eingreift, um die Zahnscheibenanordnung und damit die Seilaufnahmevorrichtung in der jeweiligen ersten Drehstellung zu halten oder anzuhalten, und welche in einer zweiten Stellung, insbesondere einer zweiten Schwenkstellung, bei in verschiedenen zweiten Drehstellungen befindlicher Zahnscheibenanordnung mit einem Sicherungsvorsprung mit einem der jeweiligen zweiten Drehstellung zugeordneten, als Sicherungszahn dienenden Zahn der Mehrzahl von Zähnen eingreift, um die Zahnscheibenanordnung und damit die Seilaufnahmevorrichtung in der jeweiligen zweiten Drehstellung zu halten oder anzuhalten, wobei die ersten Drehstellungen den Betätigungsstellungen des Betätigungsseils oder einer Untermenge dieser Betätigungsstellungen entsprechen und die zweiten Drehstellungen Zwischenstellungen des Betätigungsseils bei der Überführung des Betätigungsseil zwischen benachbarten der Betätigungsstellungen durch Freigeben des Betätigungsseils entsprechen.

Erfindungsgemäß ist vorgesehen, dass bezogen auf die erste Drehachse ein Winkelabstand zwischen dem Arretiervorsprung und dem Sicherungsvorsprung der Arretierklinke größer ist ein ein doppelter Winkelabstand bzw. ein doppelter minimaler Winkelabstand zwischen unmittelbar benachbarten Zähnen, die als Arretierzähne dienen, und kleiner ist als der Winkelabstand der Drehstellungen der Zahnscheibenanordnung, die jeweils den Betätigungsstellungen maximalen Auszugs und maximalen Einzugs des Betätigungsseils entsprechen.

In einer vorteilhaften Ausführungsform weist die Mehrzahl von Zähnen der Zahnscheibenanordnung eine Gruppe von Zähnen auf, die in Abhängigkeit von der Drehstellung der Zahnscheibenanordnung sowohl als Arretierzähne als auch als Sicherungszähne dienen, wobei die Zahnscheibenanordnung vorzugsweise eine Zahnscheibe umfasst, die die Gruppe von Zähnen aufweist. Mittels dieser Maßnahme kann die Gesamtzahl der an der Zahnscheibenanordnung vorgesehenen Zähne verringert werden, was sich insbesondere vorteilhaft auf die Zahl der möglichen Betätigungsstellungen der Zahnscheibenanordnung auswirkt.

Hierbei kann ferner der Winkelabstand zwischen dem Arretiervorsprung und dem Sicherungsvorsprung der Arretierklinke bezogen auf die erste Drehachse, also die Drehachse der Zahnscheibenanordnung, größer sein als ein Winkelabstand bzw. ein minimaler Winkelabstand zwischen unmittelbar benachbarten Zähnen der Gruppe von Zähnen, die in Abhängigkeit von der Drehstellung der Zahnscheibenanordnung sowohl als Arretierzähne als auch als Sicherungszähne dienen. Man kann hierzu auch vorsehen, dass der Winkelabstand zwischen dem Arretiervorsprung und dem Sicherungsvorsprung der Arretierklinke bezogen auf die Drehachse der Zahnscheibenanordnung größer ist als ein Winkelabstand bzw. ein minimaler Winkelabstand zweier Zähne der ersten Anzahl von Zähnen, die als Arretierzähne dienen, und kleiner ist als der größte Abstand zweier Zähne dieser ersten Anzahl von Zähnen. Beide Weiterbildungsvorschläge erlauben eine vorteilhafte und raumsparende Gestaltung der Halte- und Freigabemechanik.

Zur weiteren Verbesserung der Halteeigenschaften der erfindungsgemäßen Halte- und Freigabemechanik kann die Arretierklinke durch eine erste Federanordnung in Richtung ihrer ersten Stellung vorgespannt sein.

Um das Ausziehen des Betätigungsseils weiter zu erleichtern, kann ferner die Zahnscheibenanordnung oder die Seilaufnahmevorrichtung durch eine zweite Federanordnung in Auszugsrichtung des Betätigungsseils vorgespannt sein.

Ferner kann in einer erfindungsgemäßen Halte-und Freigabemechanik eine Aussteuereinrichtung vorgesehen sein, die dafür ausgeführt ist, in wenigstens einem vorbestimmten Drehwinkelbereich der Zahnscheibenanordnung, der wenigstens eine einer Betätigungsstellung des Betätigungsseils entsprechenden Drehstellung der Zahnscheibenanordnung umfasst, die Arretierklinke aus ihrer ersten Schwenkstellung zu entfernen oder entfernt zu halten. Die Aussteuereinrichtung kann hierbei wenigstens Nockenelement umfassen, welches der Seilaufnahmevorrichtung oder der Zahnscheibenanordnung einteilig zugehörig oder mit einem davon drehfest verbunden ist und dafür ausgeführt ist, unmittelbar oder mittels wenigstens eines weiteren Elements der Aussteuereinrichtung auf die Arretierklinke zu wirken, um diese aus ihrer ersten Schwenkstellung zu entfernen oder entfernt zu halten.

Eine der eingangs genannten Aufgaben wird überdies gelöst durch eine gattungsgemäße Halte- und Freigabemechanik mit einer im unmittelbar vorhergehenden Absatz genannten Aussteuereinrichtung. Die Anmelderin beansprucht hierfür selbständigen Schutz.

Insbesondere kann hierbei der wenigstens eine vorbestimmte Drehwinkelbereich der Zahnscheibenanordnung die Drehstellung der Zahnscheibenanordnung umfassen, die der Betätigungsstellung maximalen Auszugs des Betätigungsseils entspricht.

In einer erfindungsgemäßen Halte- und Freigabemechanik kann die Arretierklinke zum Freigeben des Betätigungsseils in der Auszugsrichtung um wenigstens einen Schritt mittels einer Betätigungseinrichtung aus der ersten Stellung in Richtung zur zweiten Stellung verstellbar sein. Es wird vor allem daran gedacht, dass die Arretierklinke aus der ersten Schwenkstellung in Richtung zur zweiten Schwenkstellung schwenkbar ist.

Vorteilhafterweise kann die erfindungsgemäße Halte- und Freigabemechanik derart ausgeführt sein, dass die Zahnscheibenanordnung wenigstens sechs, vorzugsweise wenigstens acht, höchst vorzugsweise wenigstens zehn verschiedene Drehstellungen einnehmen kann, die jeweils einer Betätigungsstellung des Betätigungsseils zugeordnet sein können.

Ferner stellt die vorliegenden Erfindung einen Schrittschalter, insbesondere für ein Fahrrad, zur Betätigung wenigstens einer Vorrichtung, beispielsweise eine zur Gangauswahl einer Fahrradgangschaltung betätigbare Schaltanordnung, mittels eines Betätigungsseils bereit. Der erfindungsgemäße Schrittschalter umfasst eine verdrehbare, das Betätigungsseil aufnehmende Seilaufnahmevorrichtung, die zwischen Drehstellung verdrehbar ist, die einer Mehrzahl von Betätigungsstellungen des Betätigungsseils entsprechen und eine Betätigungsstellung maximalen Auszugs des Betätigungsseils und eine Betätigungsstellung maximalen Einzugs des Betätigungsseils umfassen, wobei die Seilaufnahmevorrichtung mittels einer erfindungsgemäßen Halte- und Freigabemechanik nach wenigstens einem der angesprochenen Aspekte eins bis vier in einer Mehrzahl von ersten Drehstellungen der Seilaufnahmevorrichtung gegen Verdrehung in einer Freigaberichtung haltbar oder anhaltbar ist und mittels der erfindungsgemäßen Halte-und Freigabemechanik zum schrittweisen Freigeben des Betätigungsseils in einer Auszugsrichtung für eine Drehung in der Freigaberichtung freigebbar ist.

Ferner kann der erfindungsgemäße Schrittschalter eine direkt oder indirekt auf die Seilaufnahmevorrichtung wirkende, manuell betätigbare Einzugsmechanik umfassen, mittels welcher die Seilaufnahmevorrichtung schrittweise in eine der Freigaberichtung entgegengesetzten Einzugsrichtung zwischen den dem Betätigungsstellungen des Betätigungsseils entsprechenden Drehstellungen verdrehbar ist.

Die vorliegende Erfindung ein stellt ferner ein System bereit, welches einen erfindungsgemäßen Schrittschalter sowie eine Vorrichtung umfasst, die vermittels des erfindungsgemäßen Schrittschalters und des Betätigungsseils betätigbar ist. Hierzu wird vorgeschlagen, dass die Vorrichtung eine Rückstellfederanordnung aufweist, die das Betätigungsseil in Richtung zur Betätigungsstellung maximalen Auszugs vorspannt.

Vorteilhafterweise kann vorgesehen sein, dass das Betätigungsseil mit einem bewegbar angeordneten Element der Vorrichtung verbunden ist, welches durch die Rückstellfederanordnung in Richtung zu einer vorzugsweise justierbaren Anschlagsposition vorgespannt ist, die der Betätigungsstellung maximalen Auszugs des Betätigungsseils entspricht, und in der durch die Rückstellfederanordnung keine Vorspannkräfte auf das Betätigungsseil ausgeübt werden. In diesem Zusammenhang können die Erfindungsvorschläge nach dem zweiten und dritten Aspekt besonders vorteilhaft realisiert werden.

Im Falle eines Kettenumwerfers einer Fahrrad-Kettenschaltung als mittels des Schrittschalters zu betätigender Vorrichtung kann so zweckmäßig eine Justage einer Kettenumwerfer-Grundstellung erfolgen.

Die Erfindung wird unter Bezugnahme auf die beigefügten Abbildungen anhand von Ausführungsbeispielen näher erläutert. Diese zeigen im Einzelnen:
- Fig. 1: Eine schräge Draufsicht auf einen erfindungsgemäße Schrittschalter, welcher eine erste Ausführungsform einer erfindungsgemäßen Halte- und Freigabemechanik umfasst;
- Fig. 2-8: Draufsichten auf einen erfindungsgemäßen Schrittschalter, welcher eine zweite Ausführungsform einer erfindungsgemäßen Halte- und Freigabemechanik umfasst, wobei die Figuren 2 bis 6 einen Übergang der Halte- und Freigabemechanik von einer vierten in eine fünfte Betätigungsstellung illustrieren, die Figur 7 die Halte- und Freigabemechanik in einer neunten Betätigungsstellung zeigt, und die Figur 8 eine Betätigungsstellung maximalen Auszugs illustriert;
- Fig. 9: eine grob schematische Seitenansicht einer Zahnscheibenanordnung und einer Seilaufnahmevorrichtung eines Schrittschalters der zweiten Ausführungsform;
- Fig. 10: eine grob schematische Darstellung eines Systems, welches einen erfindungsgemäßen Schrittschalter, ein Betätigungsseil, und eine durch den Schrittschalter betätigte Vorrichtung umfasst.

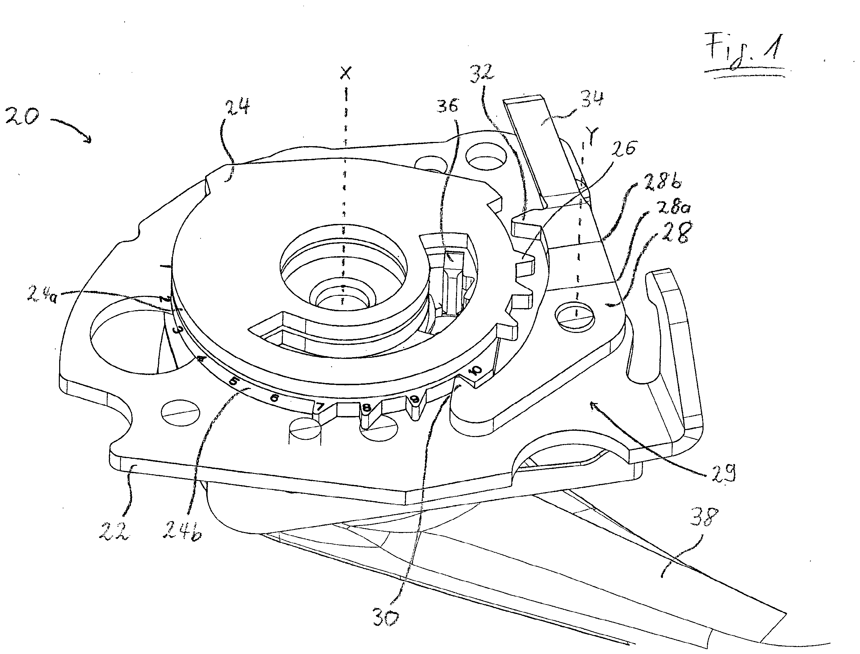

In Figur 1 ist in schräger Draufsicht ein erfindungsgemäßer Schrittschalter 20 gezeigt. Der Schrittschalter 20 umfasst eine Grundplatte 22, an der eine Zahnscheibenanordnung 24 drehbar um eine Achse X angebracht ist. Hierbei ist aus Gründen der Übersichtlichkeit auf die Darstellung der Anbringungseinrichtung verzichtet worden. Die Zahnscheibenanordnung umfasst eine obere Zahnscheibe 24a und eine untere Zahnscheibe 24b, welche einerseits drehfest miteinander, und andererseits drehfest mit einer nicht gezeigten Seilaufnahmevorrichtung verbunden sind.

Ferner umfasst der Schrittschalter eine um eine zweite Achse Y schwenkbare Arretierklinke 28, welche an ihrem einen Ende einen der Zahnscheibenanordnung 24 zugewandten Arretiervorsprung 30, sowie an einem anderen Ende einen ebenfalls der Zahnscheibenanordnung 24 zugewandten Sicherungsvorsprung 32 aufweist. Hierbei sind die Drehachse X der Zahnscheibenanordnung und die Schwenkachse Y der Arretierklinke 28 parallel zueinander ausgerichtet. Durch zwei Biegekanten 28a und 28b in der Arretierklinke 28 wird erreicht, dass der Arretiervorsprung 30 sich in der Ebene der unteren Zahnscheibe 24b befindet, während sich der Sicherungsvorsprung 32 in der Ebene der oberen Zahnscheibe 24a befindet. Ferner weist die Arretierklinke 28 an der Seite, an welcher sich der Sicherungsvorsprung mit 32 befindet, ein schräg nach oben gerichtetes Eingriffselement 34 auf, welches derart von einem hier nicht gezeigten ersten Betätigungshebel eingegriffen werden kann, dass die Arretierklinke 28 um ihre Schwenkachse Y geschwenkt wird.

Der erfindungsgemäße Schrittschalter kann beispielsweise dazu verwendet werden, eine Fahrrad-Gangschaltung, und hier insbesondere einen Kettenumwerfer zu betätigen.

Die untere Zahnscheibe 24b weist auf ihrem Außenumfang an mit 1-10 bezeichneten Winkelpositionen im Folgenden ebenfalls mit den Bezugszeichen 1-10 bezeichnete Zähne auf, von den allerdings nur die den Winkelposition 7-10 entsprechenden Zähnen in Figur 1 gezeigt sind. Ferner sind im Folgenden ebenfalls die Betätigungsstellungen der Zahnscheibenanordnung 28, bei denen jeweils der Arrtiervorsprung 30 und einer der Zähne 1-10 in Eingriff stehen, als erste bis zehnte Betätigungsstellung bezeichnet. Hierbei entspricht die erste Betätigungsstellung der Betätigungsstellung maximalen Einzugs eines von der Seilaufnahmevorrichtung aufgenommenen Betätigungsseils, während in den weiteren Betätigungsstellungen das Betätigungsseil sukzessive weiter ausgezogen wird.

Die obere Zahnscheibe 24a weist ebenfalls eine Mehrzahl von Zähnen 26 auf, deren Anzahl der Anzahl von Zähnen der unteren Zahnscheibe entspricht, von denen jedoch analog zur Darstellung der oberen Zahnscheibe nur vier gezeigt sind.

Des weiteren umfasst der gezeigte Schrittschalter 20 eine Einzugsmechanik 36, welche mittels eines zweiten Betätigungshebels 38 betätigt werden kann. Auf eine Erläuterung der Funktionsweise der Einzugsmechanik 36 soll an dieser Stelle verzichtet werden, für eine detaillierte Erklärung einer solchen Mechanik sei vielmehr auf die EP 1 366 981 A2 verwiesen.

Im Folgenden soll die Funktionsweise der durch dass Zusammenwirken der Zahnscheibenanordnung 24 und der Arretierklinke 28 gebildeten Halte- und Freigabemechanik 29 des Schrittschalters 20 erläutert werden. In der in Figur 1 gezeigten Drehstellung der Zahnscheibenanordnung 24 und Schwenkstellung der Arretierklinke 28 wirken der Arretiervorsprung 30 der Arretierklinke 28 und der Zahn 10 der unteren Zahnscheibe 24b derart zusammen, dass eine Drehung der Zahnscheibenanordnung 24 im Uhrzeigersinn verhindert wird. Hierbei ist die Zahnscheibenanordnung 24 in Uhrzeigerrichtung durch ein nicht gezeigtes Federelement vorgespannt, während die Arretierklinke 28 durch ein ebenfalls nicht gezeigtes weiteres Federelement in die in Figur 1 gezeigte Schwenkposition (Halteposition) vorgespannt ist. Die Zähne 1-10 und der Arretiervorsprung 30 sind hierbei derart angeschrägt, dass eine Drehung der Zahnscheibenanordnung 24 mittels der Einzugsmechanik entgegen dem Uhrzeigersinn möglich ist, wenn sich die Arretierklinke 28 in ihrer Haltestellung befindet. Hierbei wird die Arretierklinke 28 durch das Zusammenwirken der angeschrägten Zähne 1-10 und des Arretiervorsprungs 30 kurzzeitig aus der Haltestellung herausgeschwenkt, so dass der jeweilige Zahn 1-10 unter dem Arretiervorsprung 30 hindurchgleiten kann. Dieser Vorgang entspricht einem Schalten von einem höheren Gang zu einem niedrigeren Gang.

Will der Benutzer hingegen von einem niedrigen Gang nach oben schalten, so muss er mittels des nicht ersten gezeigten Betätigungshebels eine Kraft auf den Eingriffsvorsprung 34 der Arretierklinke 28 ausüben. Hierdurch wird die Arretierklinke 28 aus ihrer Haltestellung heraus in eine Sicherungsstellung geschwenkt, in der ihr Sicherungsvorsprung 32 gegen die Zahnscheibe 24a geschwenkt ist, ihr Arretiervorsprung 30 aber aus dem Eingriff mit der Verzahnung der Zahnscheibe 24b weggeschwenkt ist. Da wie angesprochen die Zahnscheibenanordnung 24 im Uhrzeigersinn um die Drehachse X vorgespannt ist, beginnt sie sich in diese Richtung zu drehen. Da sich nun in der Sicherungsstellung der Arretierklinke 28 der Sicherungsvorsprung 32 im Bereich der Zähne 26 der oberen Zahnscheibe 24a befindet, kann die Drehung im Uhrzeigersinn der Zahnscheibenanordnung 24 allerdings nur soweit erfolgen, bis es zu einem Eingriff des Sicherungsvorsprungs 32 mit dem nächsten der Zähne 26 der oberen Zahnscheibe 24a kommt. Nach Ende des Betätigungseingriffs durch den Benutzer schwenkt nun die Arretierklinke 28 aufgrund ihrer Vorspannung wieder zurück in die Halteposition. Da hierbei der Eingriff zwischen dem Sicherungsvorsprung 32 und dem jeweiligen Zahn 26 der oberen Zahnscheibe 24a aufgehoben wird, kann sich nun die Zahnscheibenanordnung 24 erneut soweit im Uhrzeigersinn drehen, bis es wiederum zu einem Eingriff zwischen dem Arretiervorsprung 30 und dem jeweils nächsten der Zähne 1-10 der unteren Zahnscheibe 24b kommt.

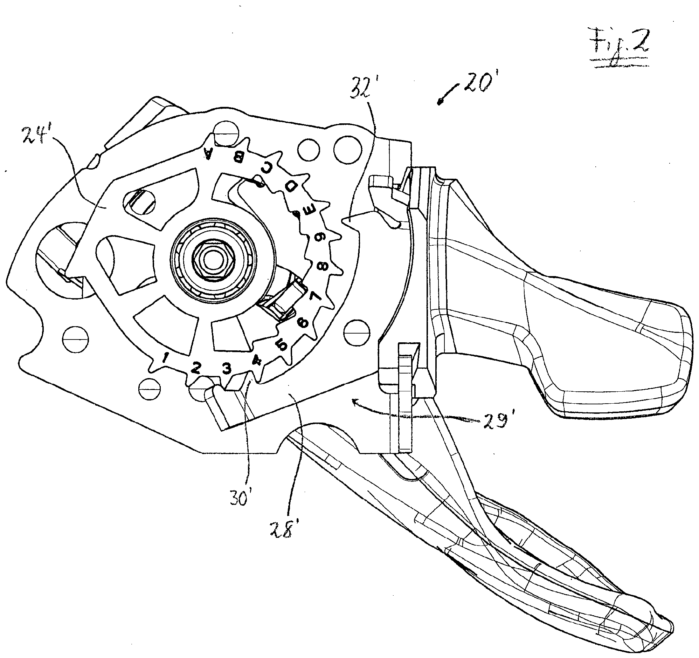

In den Figuren 2-6 ist anhand einer zweiten Ausführungsform eines erfindungsgemäßen Schrittschalters 20' ein solcher Freigabevorgang erneut schrittweise illustriert. Die dort gezeigte Zahnscheibenanordnung 24' besteht lediglich aus einer einzelnen Zahnscheibe 24', welche eine Anzahl von Zähnen 1-9 und A-E aufweist, die größer ist als die Anzahl der vorgesehenen Betätigungsstellungen der Zahnscheibenanordnung. Die in den Figuren 2-8 gezeigte zweite Ausführungsform einer erfindungsgemäßen Halte- und Freigabemechanik 29' wird gebildet durch das Zusammenwirken der Zahnscheibenanordnung 24' und der Arretierklinke 28'. Hierbei weist die Zahnscheibenanordnung 24' insgesamt 14 Zähne 1-9 und A-E auf, welche sich sämtlich in einer einzelnen, senkrecht zu der in die Zeichenebene hinein weisenden Drehachse X der Zahnscheibenanordnung 24' liegenden Ebene befinden. Dementsprechend ist auch die Arretierklinke 28' derart gebildet, dass sich ihr Arretiervorsprung 30' und ihr Sicherungsvorsprung 32' in eben jener Ebene befinden. Im Gegensatz zu der in Figur 1 gezeigten ersten Ausführungsform gilt in dieser zweiten Ausführungsform, dass ein Teil der Zähne 1-9 und A-E der Zahnscheibenanordnung 24' je nach Drehstellung der Zahnscheibenanordnung 24' und Schwenkstellung der Arretierklinke 28' entweder mit dem Arretiervorsprung 30' oder mit dem Sicherungsvorsprung 32' der Arretierklinke 28' in Eingriff kommen können.

In den Figuren 2-6 ist ein Freigabevorgang illustriert, der einem Übergang von einer vierten in eine fünfte Betätigungsstellung entspricht. In Figur 2 befinden sich der Zahn 4 der Zahnscheibenanordnung 24' und der Arretiervorsprung 30' der sich in ihrer Halteposition befindlichen Arretierklinke 28' im Eingriff. Da die Zahnscheibenanordnung 24' im Uhrzeigersinn und die Arretierklinke 28' in die gezeigte Halteposition vorgespannt sind, ist die Zahnscheibenanordnung 24' in dieser Betätigungsstellung festgesetzt.

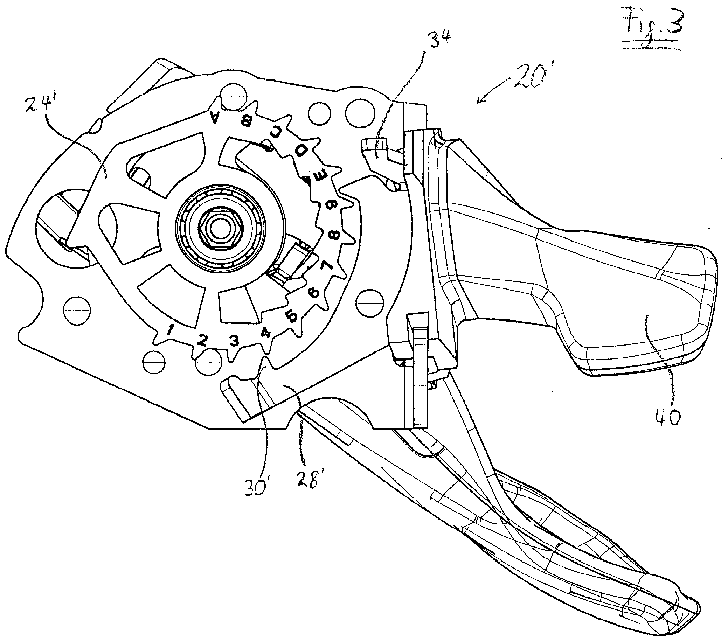

In Figur 3 ist nun eine beginnende Freigabebetätigung der Arretierklinke 28' gezeigt welche durch ein nach-oben-Drücken des Betätigungshebels 40 durch einen Benutzer ausgelöst wird. Dieser Betätigungshebel 40 wirkt auf den Eingriffsvorsprung 34 der Arretierklinke 28' und schwenkt diese aus ihrer Halteposition heraus in Richtung ihrer Sicherungsposition. In der in Figur 3 dargestellten Schwenkstellung der Arretierklinke 28' haben sich der Zahn 4 und der Arretiervorsprung 30' gerade aus dem Eingriff herausbewegt und aufgrund der in Uhrzeigerrichtung liegenden Vorspannung auf die Zahnscheibenanordnung 24' beginnt diese sich zu drehen.

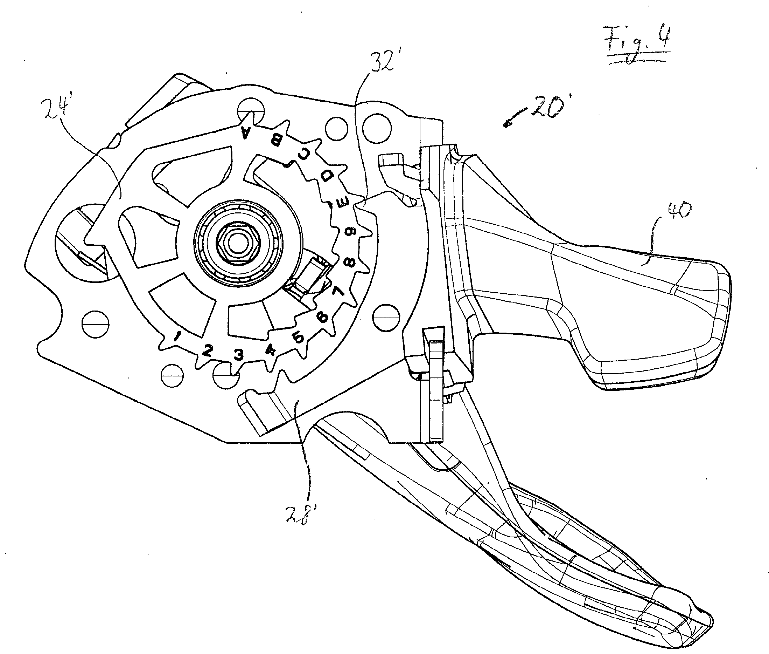

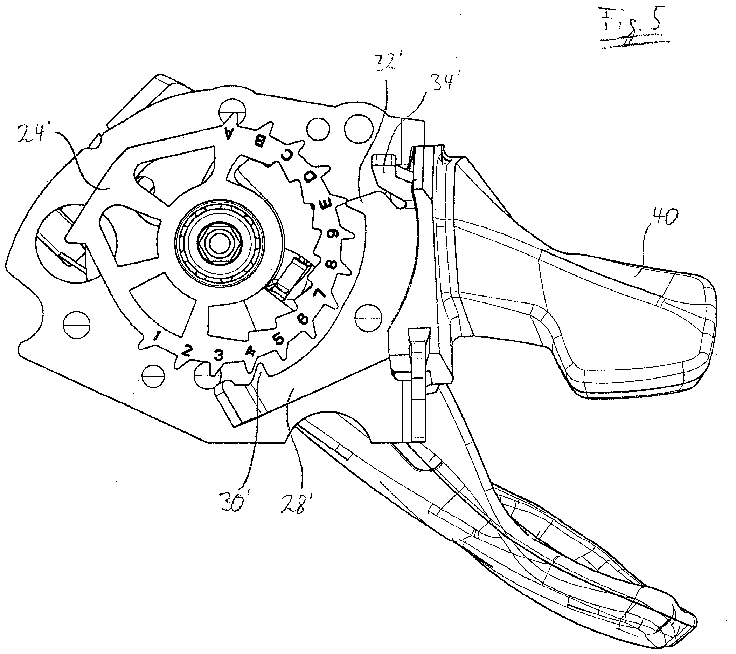

Diese Drehung erfolgt soweit, bis es zu dem in Figur 4 gezeigten Eingriff zwischen dem Sicherungsvorsprung 32' und dem Zahn E der Zahnscheibenanordnung 24' kommt. Wenn nun der Benutzer aufhört, einen Druck auf den Betätigungshebel 40 auszuüben, so beginnt dass in Figur 5 gezeigte Zurückschwenken der Arretierklinke 28' in ihre Halteposition. Hierbei treten der Sicherungsvorsprung 32' der Arretierklinke 28' und der Zahn E der Zahnscheibenanordnung 24' außer Eingriff. Nun beginnt erneut die Zahnscheibenanordnung 24' erneut, sich im Uhrzeigersinn weiter zu drehen.

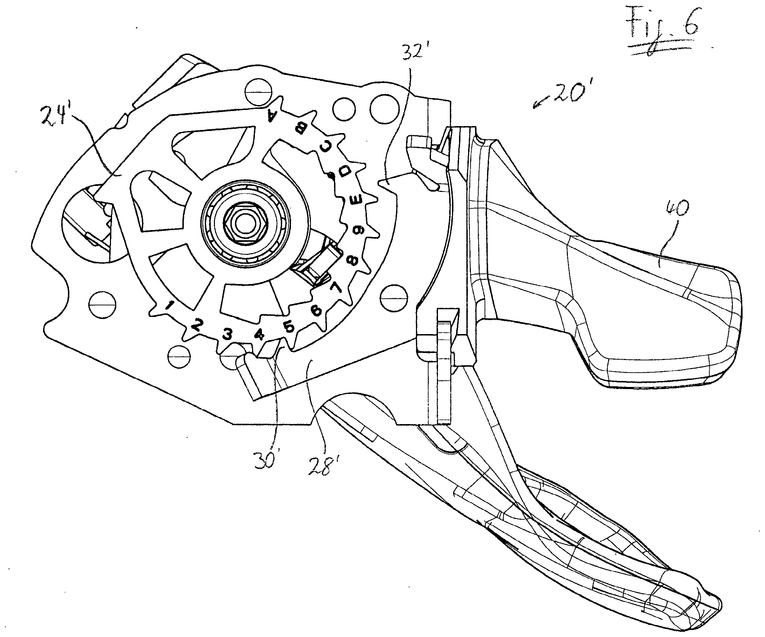

In Figur 6 ist schließlich der Zustand gezeigt, in welchem der Zahn 5 der Zahnscheibenanordnung 24' und der Arretiervorsprung 30' der Arretierklinke 28' im Eingriff miteinander stehen. In diesem Zustand wird die Zahnscheibenanordnung 24' in ihrer fünften Betätigungsstellung durch die Arretierklinke 28' festgehalten.

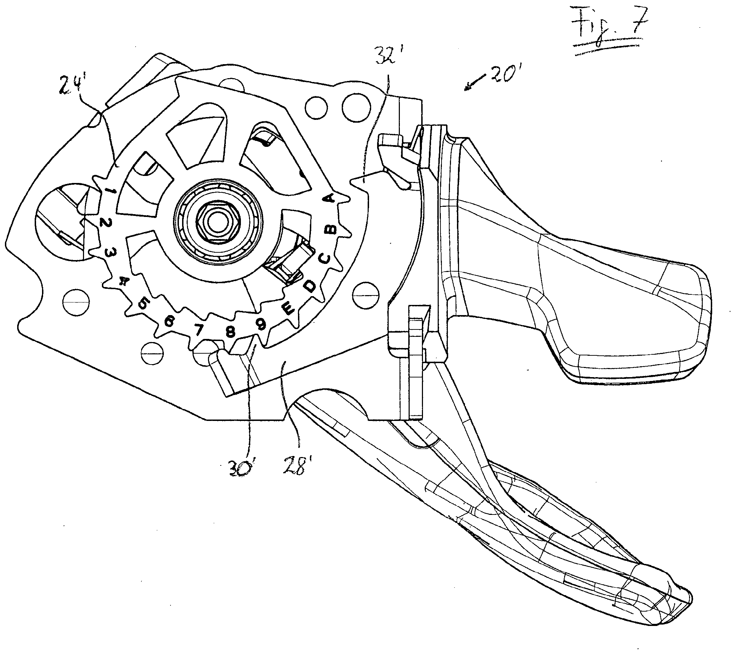

In Figur 7 ist ein Zustand des Schrittschalters gezeigt, in welchem die Zahnscheibenanordnung 24' in ihrer neunten Betätigungsstellung festgehalten wird. Es ist zu erkennen, dass durch die Wahl der Anzahl der Zähne 1-9 und A-E der Zahnscheibenanordnung 24' nun entgegen dem Uhrzeigersinn von Zahn A ausgesehen kein Zahn mehr an der Zahnscheibenanordnung 24' zur Verfügung steht, welcher bei einem weiteren Freigabevorgang mit dem Sicherungsvorsprung 32' der Arretierklinke 28' in Eingriff treten könnte. Auf diese Art und Weise wird erreicht, dass das Hochschalten von der neunten in die zehnte Betätigungsposition ohne ein zwischenzeitliches Anhalten der Zahnscheibenanordnung 24' erreicht wird.

Die zehnte Betätigungsposition, also die Betätigungsstellung maximalen Auszugs, kann durch einen schalterinternen Anschlag für die Zahnscheibe oder die beispielsweise als Wickeltrommel ausgeführte Seilaufnahmevorrichtung definiert sein. Demgegenüber ist es aber bevorzugt, dass die Betätigungsstellung maximalen Auszugs nur unscharf definiert ist und durch die mittels des Schalters betätigte Vorrichtung definiert wird, nämlich einer Betätigungsstellung dieser Vorrichtung, die dem Zustand maximalen Seilauszugs entspricht und beispielsweise durch einen justierbaren Anschlag dieser Vorrichtung, beispielsweise einer Umwerfervorrichtung einer Fahrrad-Kettenschaltung, definiert wird.

In diesem Zusammenhang ist zu erläutern, dass die vorstehend beschriebenen Ausführungsbeispiele davon ausgehen, dass das Betätigungsseil durch die zu betätigende Vorrichtung in Auszugsrichtung vorgespannt ist, so dass das Ausziehen des Bezugsseils auf Basis dieser Zugspannung von Seiten der betätigten Vorrichtung unter Mithilfe des angesprochenen Federelements ausgezogen wird.

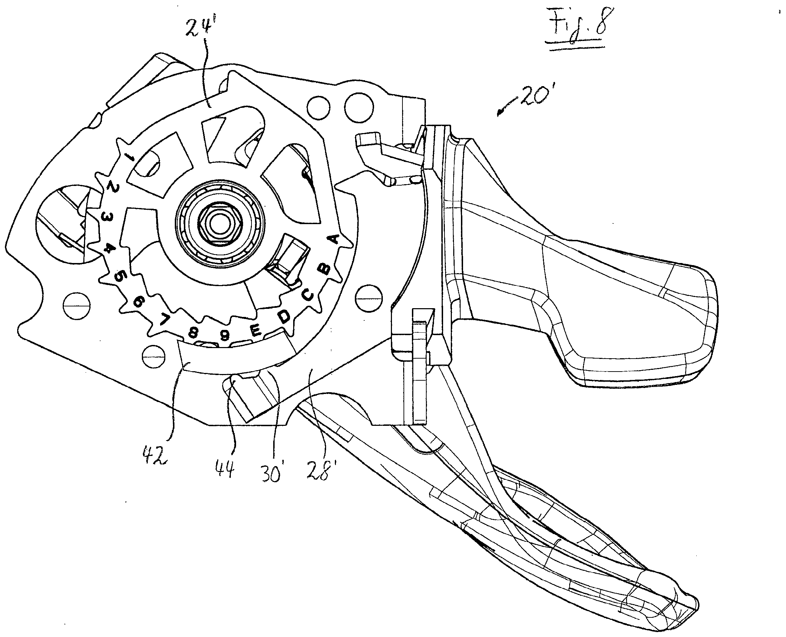

Die durch ein Freigeben der Zahnscheibenanordnung 24' aus der neunten Betätigungsstellung zu erreichenden Betätigungsstellung entspricht demzufolge der Betätigungsstellung maximalen Auszugs des Schrittschalters 20'. Diese Betätigungsstellung maximalen Auszugs ist in Figur 8 dargestellt. Hierin ist das drehfest mit der Zahnscheibenanordnung 24', oberhalb davon angeordnete Nockenelement 42 zu erkennen, welches aus Gründen der Übersichtlichkeit in den vorherigen Figuren nicht dargestellt war. In der in Figur 8 gezeigten Betätigungsposition maximalen Auszugs kommt es zu einem Eingriff zwischen dem Nockenelement 42 und einem Festsetzvorsprung 44, welcher sich an dem Ende der Arretierklinke 28' nach oben erstreckt, an welchem ebenfalls der Arretiervorsprung 30' vorgesehen ist. Der Eingriff zwischen Nockenelement 42 und Festsetzvorsprung 44 führt dazu, dass die Arretierklinke 28' in dieser Betätigungsstellung der Zahnscheibenanordnung 24' nicht mehr in ihre Halteposition zurückschwenken kann. Somit ist diese Betätigungsstellung also nicht durch einen Eingriff der Arretierklinke 28' mit der Zahnscheibenanordnung 24' definiert, sondern kann mittels des zuvor erwähnten Endanschlags außerhalb des Schrittschalters 20' feinjustiert werden.

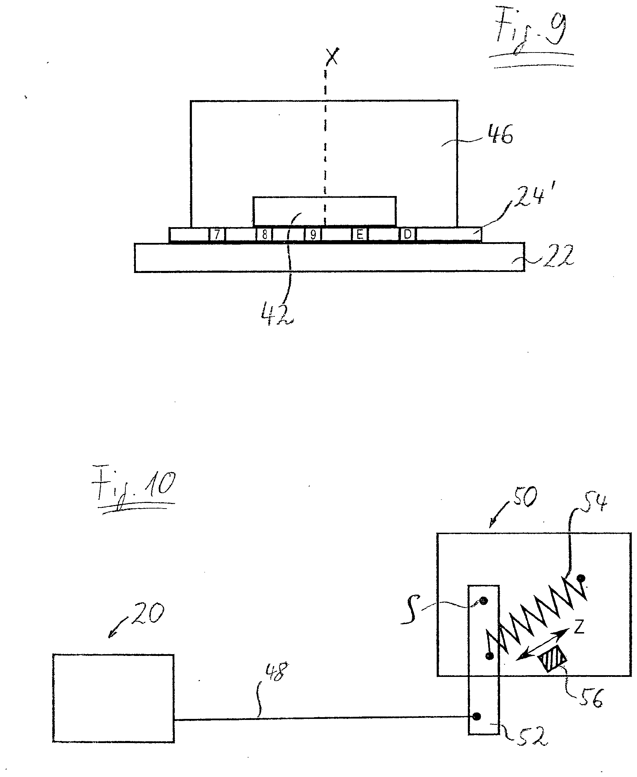

Zur Verdeutlichung deiner möglichen Anordnung von Zahnscheibe 24', Nockenelement 42 und Seilaufnahmevorrichtung 46 sei ferner auf die Figur 9 verwiesen. Hierin ist die durch die Zahnscheibe 24' und die Seilaufnahmevorrichtung 46 gebildete Baugruppe im Bereich der Zähne 7-9, E und D von der Seite gezeigt. Wie zu erkennen ist, ist das Nockenelement von der Grundplatte 22 aus gesehen oberhalb der Zahnscheibe 24' an der Seilaufnahmevorrichtung 46 drehfest angebracht und überspannt im Wesentlichen die Zähne 8, 9 und E der Zahnscheibe 24'. Da das Nockenelement 42 nicht in die Ebene der Zahnscheibe 24' hineinragt, findet unabhängig von der Drehstellung der Zahnscheibe 24' bezüglich der in Figur 9 nicht gezeigten Arretierklinke kein Eingriff zwischen dem Nockenelement 42 und dem Arretiervorsprung 30' oder dem Sicherungsvorsprung 32' der Arretierklinke 28' statt. Das Nockenelement kann folglich lediglich in der in Figur 8 gezeigten Drehstellung der Zahnscheibe 24' mit dem Festsetzvorsprung 44 eingreifen.

In Figur 10 ist schließlich das aus Schrittschalter 20, Betätigungsseil 48 und durch den Schrittschalter betätigbare Vorrichtung 50 gebildete System gemäß einem zweckmäßigen Ausführungsbeispiel grob schematisch dargestellt. Hierbei kann es sich bei der betätigbaren Vorrichtung 50 insbesondere um eine Fahrrad-Kettenschaltung handeln, wobei ein mittels des Betätigungsseils 48 betätigbarer Umwerfer mit einem Betätigungselement 52 bewegungsverkoppelt ist, an dem das Betätigungsseil 48 (beispielsweise der Seilzug eines Bowdenzugs) eingehängt ist. Die Kettenschaltung 50 weist ferner ein weiteres Federelement 54 auf, welches das um die Schwenkachse S schwenkbare Betätigungselement 52 und damit auch das Betätigungsseil 48 in eine Betätigungsstellung maximalen Auszugs des Betätigungsseils 48 vorspannt. Zur Feinjustage dieser Betätigungsstellung maximalen Auszugs und damit einer Betätigungsstellung des Umwerfers ist in der betätigbaren Vorrichtung 50 ein entlang einer Achse Z verstellbarer Endanschlag 56 vorgesehen.

Bereitgestellt wird eine Halte- und Freigabemechanik zum Halten und Freigeben einer Seilaufnahmevorrichtung etwa eines Schrittschalters, umfassend eine der Seilaufnahmevorrichtung einteilig zugehörige oder drehfest damit verbundene oder verbindbare, mit dieser um eine erste Achse (X) verdrehbare Zahnscheibenanordnung, welche an ihrem Außenumfang eine Mehrzahl von Zähnen aufweist; eine verstellbare, vorzugsweise um eine zweite Achse (Y) schwenkbare Arretierklinke, welche in einer ersten Stellung, insbesondere einer ersten Schwenkstellung, bei in verschiedenen ersten Drehstellungen befindlicher Zahnscheibenanordnung mit einem Arretiervorsprung mit einem der jeweiligen ersten Drehstellung zugeordneten, als Arretierzahn dienenden Zahn der Mehrzahl von Zähnen eingreift, um die Zahnscheibenanordnung und damit die Seilaufnahmevorrichtung in der jeweiligen ersten Drehstellung zu halten oder anzuhalten, und welche in einer zweiten Stellung, insbesondere einer zweiten Schwenkstellung, bei in verschiedenen zweiten Drehstellungen befindlicher Zahnscheibenanordnung mit einem Sicherungsvorsprung mit einem der jeweiligen zweiten Drehstellung zugeordneten, als Sicherungszahn dienenden Zahn der Mehrzahl von Zähnen eingreift, um die Zahnscheibenanordnung und damit die Seilaufnahmevorrichtung in der jeweiligen zweiten Drehstellung zu halten oder anzuhalten, wobei die ersten Drehstellungen Betätigungsstellungen des Betätigungsseils oder einer Untermenge dieser Betätigungsstellungen entsprechen und die zweiten Drehstellungen Zwischenstellungen des Betätigungsseils bei der Überführung des Betätigungsseil zwischen benachbarten der Betätigungsstellungen durch Freigeben des Betätigungsseils entsprechen.

## Patentansprüche

1. Halte- und Freigabemechanik zum Halten und Freigeben einer Seilaufnahmevorrichtung (46) etwa eines Schrittschalters (20), beispielsweise für ein Fahrrad, zum Halten eines mittels der Seilaufnahmevorrichtung (46) aufnehmbaren Betätigungsseils (48) in einer Mehrzahl von Betätigungsstellungen, umfassend eine Betätigungsstellung maximalen Auszugs des Betätigungsseils (48) von der Seilaufnahmevorrichtung (46) und eine Betätigungsstellung maximalen Einzugs des Betätigungsseils (48) durch die Seilaufnahmevorrichtung (46), und zum schrittweisen Freigeben des Betätigungsseils (48) in einer Auszugsrichtung; umfassend:
- eine der Seilaufnahmevorrichtung (46) einteilig zugehörige oder drehfest damit verbundene oder verbindbare, mit dieser um eine erste Achse (X) verdrehbare Zahnscheibenanordnung (24), welche an ihrem Außenumfang eine Mehrzahl von Zähnen (1-10, 26) aufweist;
- eine um eine zweite Achse (Y) schwenkbare Arretierklinke (28), welche in einer ersten Schwenkstellung, bei in verschiedenen ersten Drehstellungen befindlicher Zahnscheibenanordnung (24) mit einem Arretiervorsprung (30) mit einem der jeweiligen ersten Drehstellung zugeordneten, als Arretierzahn dienenden Zahn (1-10) der Mehrzahl von Zähnen (1-10, 26) eingreift, um die Zahnscheibenanordnung (24) und damit die Seilaufnahmevorrichtung (46) in der jeweiligen ersten Drehstellung zu halten oder anzuhalten, und welche in einer zweiten Schwenkstellung, bei in verschiedenen zweiten Drehstellungen befindlicher Zahnscheibenanordnung (24) mit einem Sicherungsvorsprung (32) mit einem der jeweiligen zweiten Drehstellung zugeordneten, als Sicherungszahn dienenden Zahn (26) der Mehrzahl von Zähnen (1-10, 26) eingreift, um die Zahnscheibenanordnung (24) und damit die Seilaufnahmevorrichtung (46) in der jeweiligen zweiten Drehstellung zu halten oder anzuhalten, wobei die ersten Drehstellungen den Betätigungsstellungen des Betätigungsseils (48) oder einer Untermenge dieser Betätigungsstellungen entsprechen und die zweiten Drehstellungen Zwischenstellungen des Betätigungsseils (48) bei der Überführung des Betätigungsseil (48) zwischen benachbarten der Betätigungsstellungen durch Freigeben des Betätigungsseils (48) entsprechen; **dadurch gekennzeichnet, dass** die Mehrzahl von Zähnen (1-10, 26) der Zahnscheibenanordnung (24) eine erste Gruppe von Zähnen und eine zweite Gruppe von Zähnen aufweist, wobei die Zähne (1-10) der ersten Gruppe von Zähnen als Arretierzähne dienen und in einer zur ersten Achse (X) orthogonalen ersten Zahnebene angeordnet sind und die Zähne (26) der zweiten Gruppe von Zähnen als Sicherungszähne dienen und in einer zur ersten Achse (X) orthogonalen, gegenüber der ersten Zahnebene versetzten zweiten Zahnebene angeordnet sind, und **dadurch gekennzeichnet, dass** die erste Achse (X) und die zweite Achse (Y) im wesentlichen parallel zueinander sind.

2. Halte- und Freigabemechanik nach Anspruch 1, **dadurch gekennzeichnet, dass** die erste Gruppe von Zähnen und die zweite Gruppe von Zähnen jeweils die gleiche Anzahl von Zähnen (1-10, 26) aufweisen, die vorzugsweise der Anzahl von Betätigungsstellungen des Betätigungsseils (48) entspricht.

3. Halte- und Freigabemechanik nach einem der vorhergehenden Ansprüche, **dadurch gekennzeichnet, dass** die Arretierklinke (28) derart ausgestaltet ist, dass der Arretiervorsprung (30) in der ersten Zahnebene und der Sicherungsvorsprung (32) in der zweiten Zahnebene angeordnet ist.

4. Halte- und Freigabemechanik nach einem der vorhergehenden Ansprüche, **dadurch gekennzeichnet, dass** die Zähne (1-10) der ersten Gruppe von Zähnen sich über einen ersten Winkelbereich in Bezug auf die erste Drehachse (X) erstrecken, und die Zähne (26) der zweiten Gruppe von Zähnen sich über einen, sich mit dem ersten Winkelbereich überlappenden, zweiten Winkelbereich in Bezug auf die erste Drehachse (X) erstrecken.

5. Halte- und Freigabemechanik nach einem der vorhergehenden Ansprüche, **dadurch gekennzeichnet, dass** die Zahnscheibenanordnung (24) zwei drehfest miteinander verbundene Zahnscheiben (24a, 24b) umfasst, von denen die eine die erste Gruppe von Zähnen und die andere die zweite Gruppe von Zähnen aufweist.

6. Halte- und Freigabemechanik nach einem der Ansprüche 1 bis 5, **dadurch gekennzeichnet, dass** der Betätigungsstellung maximalen Auszugs des Betätigungsseils (48) kein als Arretierzahn dienender Zahn (1-10, 26; A-E) der Mehrzahl von Zähnen zugeordnet ist, so dass die Zahnscheibenanordnung (24; 24') in einer der Betätigungsstellung maximalen Auszugs des Betätigungsseils (48) entsprechenden Drehstellung der Zahnscheibenanordnung (24; 24') und damit der Seilaufnahmevorrichtung (46) nicht durch Eingriff des Arretiervorsprungs (30; 30') mit einem Zahn (1-10, 26; A-E) angehalten und gehalten wird.

7. Halte- und Freigabemechanik nach einem der Ansprüche 1 bis 6, **dadurch gekennzeichnet, dass** die Zahnscheibenanordnung (24; 24') und damit die Seilaufnahmevorrichtung (46) von einer Drehstellung, die einer der Betätigungsstellung maximalen Auszugs des Betätigungsseils (48) vorausgehenden Betätigungsstellung des Betätigungsseils (48) entspricht, unmittelbar in eine/die der Betätigungsstellung maximalen Auszugs des Betätigungsseils (48) entsprechende Drehstellung der Zahnscheibenanordnung (24; 24') und damit der Seilaufnahmevorrichtung (46) durch Freigeben des Betätigungsseils (48) überführbar ist, ohne Anhalten der Zahnscheibenanordnung (24; 24') und damit der Seilaufnahmevorrichtung (46) vermittels des Sicherungsvorsprungs (32; 32') und eines als Sicherungszahn dienenden Zahns (26; 1-9, A-E) der Mehrzahl von Zähnen an einer Zwischenstellung.

8. Halte- und Freigabemechanik nach einem der Ansprüche 1 bis 7, **dadurch gekennzeichnet, dass** bezogen auf die erste Drehachse (X) ein Winkelabstand zwischen dem Arretiervorsprung (30; 30') und dem Sicherungsvorsprung (32; 32') der Arretierklinke (28; 28') größer ist als ein doppelter Winkelabstand bzw. ein doppelter minimaler Winkelabstand zwischen unmittelbar benachbarten Zähnen (1-10, 26; A-E), die als Arretierzähne dienen, und kleiner ist als der Winkelabstand der Drehstellungen der Zahnscheibenanordnung (24; 24'), die jeweils den Betätigungsstellungen maximalen Auszugs und maximalen Einzugs des Betätigungsseils (48) entsprechen.

9. Halte- und Freigabemechanik nach einem der Ansprüche 6 bis 8, **dadurch gekennzeichnet, dass** die Mehrzahl von Zähnen (1-9, A-E) der Zahnscheibenanordnung (24') eine Gruppe von Zähnen aufweist, die in Abhängigkeit von der Drehstellung der Zahnscheibenanordnung (24') sowohl als Arretierzähne als auch als Sicherungszähne dienen, wobei die Zahnscheibenanordnung (24') vorzugsweise eine Zahnscheibe (24') umfasst, die die Gruppe von Zähnen aufweist.

10. Halte- und Freigabemechanik nach Anspruch 9, **dadurch gekennzeichnet, dass** bezogen auf die erste Drehachse (X) ein Winkelabstand zwischen dem Arretiervorsprung (30') und dem Sicherungsvorsprung (32') der Arretierklinke (28') größer ist ein Winkelabstand bzw. ein minimaler Winkelabstand zwischen unmittelbar benachbarten Zähnen (1-9, A-E) der Gruppe von Zähnen, die in Abhängigkeit von der Drehstellung der Zahnscheibenanordnung (24') sowohl als Arretierzähne als auch als Sicherungszähne dienen.

11. Halte- und Freigabemechanik nach einem der vorhergehenden Ansprüche, **dadurch gekennzeichnet, dass** die Arretierklinke (28; 28') durch eine erste Federanordnung in Richtung der ersten Stellung vorgespannt ist.

12. Halte- und Freigabemechanik nach einem der vorhergehenden Ansprüche, **dadurch gekennzeichnet, dass** die Zahnscheibenanordnung (24; 24') oder die Seilaufnahmevorrichtung (46) durch eine zweite Federanordnung in Auszugsrichtung des Betätigungsseils (48) vorgespannt ist.

13. Halte- und Freigabemechanik nach einem der vorhergehenden Ansprüche, **gekennzeichnet durch** eine Aussteuereinrichtung (42), die dafür ausgeführt ist, in wenigstens einem vorbestimmten Drehwinkelbereich der Zahnscheibenanordnung (24; 24'), der wenigstens eine einer Betätigungsstellung des Betätigungsseils (48) entsprechende Drehstellung der Zahnscheibenanordnung (24; 24') umfasst, die Arretierklinke (28; 28') aus ihrer ersten Schwenkstellung zu entfernen oder entfernt zu halten.

14. Halte- und Freigabemechanik nach Anspruch 13, **dadurch gekennzeichnet, dass** die Aussteuereinrichtung (42) wenigstens ein Nockenelement (42) umfasst, welches der Seilaufnahmevorrichtung (46) oder der Zahnscheibenanordnung (24; 24') einteilig zugehörig oder mit einem davon drehfest verbunden ist und dafür ausgeführt ist, unmittelbar oder mittels wenigstens eines weiteren Elements (44) der Aussteuereinrichtung (42) auf die Arretierklinke (28; 28') zu wirken, um diese aus ihrer ersten Schwenkstellung zu entfernen oder entfernt zu halten.

15. Halte- und Freigabemechanik nach Anspruch 13 oder 14, **dadurch gekennzeichnet, dass** der wenigstens eine vorbestimmte Drehwinkelbereich der Zahnscheibenanordnung (24; 24') die Drehstellung der Zahnscheibenanordnung (24; 24') umfasst, die der Betätigungsstellung maximalen Auszugs des Betätigungsseils (48) entspricht.

16. Halte- und Freigabemechanik nach einem der vorhergehenden Ansprüche, **dadurch gekennzeichnet, dass** die Arretierklinke (28; 28') zum Freigeben des Betätigungsseils (48) in der Auszugsrichtung um wenigstens einen Schritt mittels einer Betätigungseinrichtung (40) aus der ersten Stellung in Richtung zur zweiten Stellung verstellbar ist.

17. Halte- und Freigabemechanik nach einem der vorhergehenden Ansprüche, **dadurch gekennzeichnet, dass** die Zahnscheibenanordnung (24; 24') und damit die Seilaufnahmevorrichtung (46) des Schaltmechnismus wenigstens sechs, bevorzugt wenigstens acht, höchstvorzugsweise wenigstens zehn verschiedene Drehstellungen einnehmen kann, die jeweils einer Betätigungsstellung des Betätigungsseil (48) zugeordnet sind.

18. Schrittschalter, insbesondere für ein Fahrrad, zur Betätigung wenigstens einer Vorrichtung (50), beispielsweise eine zur Gangauswahl einer FahrradGangschaltung betätigbare Schaltanordnung, mittels eines Betätigungsseils (48), umfassend eine verdrehbare, das Betätigungsseil (48) aufnehmende Seilaufnahmevorrichtung (46), die zwischen Drehstellungen verdrehbar ist, die einer Mehrzahl von Betätigungsstellungen des Betätigungsseils (48), umfassend eine Betätigungsstellung maximalen Auszugs des Betätigungsseils (48) von Seilaufnahmevorrichtung (46) und eine Betätigungsstellung maximalen Einzugs des Betätigungsseils (48) durch die Seilaufnahmevorrichtung (46), entsprechen, wobei die Seilaufnahmevorrichtung (46) mittels einer Halte- und Freigabemechanik (29; 29') nach einem der vorhergehenden Ansprüche in einer Mehrzahl von ersten Drehstellungen der Seilaufnahmevorrichtung (46) gegen Verdrehung in einer Freigaberichtung gehalten wird und mittels der Halte- und Freigabemechanik (29; 29') zum schrittweisen Freigeben des Betätigungsseils (46) in einer Auszugsrichtung für eine Drehung in der Freigaberichtung freigegeben wird.

19. Schrittschalter nach Anspruch 18, **gekennzeichnet durch** eine direkt oder indirekt auf die Seilaufnahmevorrichtung (48) wirkende, manuell betätigbare Einzugsmechanik (36), mittels der die Seilaufnahmevorrichtung (48) schrittweise in einer der Freigaberichtung entgegengesetzten Einzugsrichtung zwischen den den Betätigungsstellungen des Betätigungsseils (46) entsprechenden Drehstellungen verdrehbar ist.

20. System, umfassend einen Schrittschalter (20; 20') nach Anspruch 18 oder 19 und eine Vorrichtung (50), die vermittels des Schrittschalters (20; 20') und des Betätigungsseils (46) betätigbar ist, **dadurch gekennzeichnet, dass** die Vorrichtung (50) eine Rückstellfederanordnung (54) aufweist, die das Betätigungsseil (46) in Richtung zur Betätigungsstellung maximalen Auszugs vorspannt.

21. System nach Anspruch 20, **dadurch gekennzeichnet, dass** das Betätigungsseil (46) mit einem bewegbar angeordneten Element (52) der Vorrichtung (50) verbunden ist, welches durch die Rückstellfederanordnung (54) in Richtung zu einer vorzugsweise justierbaren Anschlagposition vorgespannt ist, die der Betätigungsstellung maximalen Auszugs des Betätigungsseils (46) entspricht und in der durch die Rückstellfederanordnung (54) keine Vorspannkräfte auf das Betätigungsseil (46) ausgeübt werden.

## Claims

1. Holding and release mechanism for holding and releasing a cable uptake device (46) such as a step-switch (20), for example for a bicycle, for holding an actuating cable (48), which can be taken up by the cable uptake device (46), in a plurality of actuating positions, comprising an actuating position of maximum extension of the actuating cable (48) from the cable uptake device (46) and an actuating position of maximum retraction of the actuating cable (48) by the cable uptake device (46), and for stepped release of the actuating cable (48) in an extraction direction; comprising:
- a toothed washer assembly (24) which is integrally associated with or is or can be connected to the cable uptake device (46) for conjoint rotation, and is rotatable therewith about a first axis (X), and which comprises a plurality of teeth (1-10, 26) on the outer periphery thereof;
- a locking detent (28) which is pivotable about a second axis (Y) and which, in a first pivot position, in the case of a toothed washer assembly (24) located in different first rotational positions, engages by a locking projection (30) with a tooth (1-10), of the plurality of teeth (1-10, 26), which is associated with the respective first rotational position and serves as a locking tooth, in order to hold or stop the toothed washer assembly (24), and thus the cable uptake device (46), in the respective first rotational position, and which, in a second pivot position, in the case of a toothed washer assembly (24) located in different second rotational positions, engages by a securing projection (32) with a tooth (26), of the plurality of teeth (1-10, 26), which is associated with the respective second rotational position and serves as a securing tooth, in order to hold or stop the toothed washer assembly (24), and thus the cable uptake device (46), in the respective second rotational position, the first rotational positions corresponding to the actuating positions of the actuating cable (48) or a subset of said actuating positions, and the second rotational positions correspond to intermediate positions of the actuating cable (48) upon transfer of the actuating cable (48) between adjacent actuating positions by releasing the actuating cable (48); **characterised in that** the plurality of teeth (1-10, 26) of the toothed washer assembly (24) comprises a first group of teeth and a second group of teeth, the teeth (1-10) of the first group of teeth serving as locking teeth and being arranged in a first tooth plane that is orthogonal to the first axis (X), and the teeth (26) of the second group of teeth serving as securing teeth and being arranged in a second tooth plane which is orthogonal to the first axis (X) and is offset relative to the first tooth plane, and **characterised in that** the first axis (X) and the second axis (Y) are substantially mutually parallel.

2. Holding and release mechanism according to claim 1, **characterised in that** the first group of teeth and the second group of teeth each comprise the same number of teeth (1-10, 26) which preferably corresponds to the number of actuating positions of the actuating cable (48).

3. Holding and release mechanism according to either of the preceding claims, **characterised in that** the locking detent (28) is designed such that the locking projection (30) is arranged in the first tooth plane, and the securing projection (32) is arranged in the second tooth plane.

4. Holding and release mechanism according to any of the preceding claims, **characterised in that** the teeth (1-10) of the first group of teeth extend over a first angular range with respect to the first axis of rotation (X), and the teeth (26) of the second group of teeth extend over a second angular range, with respect to the first axis of rotation (X), which overlaps with the first angular range.

5. Holding and release mechanism according to any of the preceding claims, **characterised in that** the toothed washer assembly (24) comprises two toothed washers (24a, 24b) which are interconnected for conjoint rotation, of which one comprises the first group of teeth and the other comprises the second group of teeth.

6. Holding and release mechanism according to any of claims 1 to 5, **characterised in that** the actuating position of maximum extension of the actuating cable (48) is not associated with a tooth (1-10, 26; A-E) of the plurality of teeth that serves as a locking tooth, such that the toothed washer assembly (24; 24') is not stopped and retained by engagement of the locking projection (30; 30') with a tooth (1-10, 26; A-E), in a rotational position of the toothed washer assembly (24; 24'), and thus of the cable uptake device (46), which corresponds to the actuating position of maximum extension of the actuating cable (48).

7. Holding and release mechanism according to any of claims 1 to 6, **characterised in that** the toothed washer assembly (24; 24') and thus the cable uptake device (46) can be transferred from a rotational position which corresponds to an actuating position of the actuating cable (48) preceding the actuating position of maximum extension of the actuating cable (48), directly into a/the rotational position of the toothed washer assembly (24; 24'), and thus the cable uptake device (46), which corresponds to the actuating position of maximum extension of the actuating cable (48), by releasing the actuating cable (48), without the toothed washer assembly (24; 24'), and thus the cable uptake device (46), being stopped by means of the securing projection (32; 32') and a tooth (26; 1-9, A-E) of the plurality of teeth, which serves as a securing tooth, at an intermediate position.

8. Holding and release mechanism according to any of claims 1 to 7, **characterised in that,** with respect to the first axis of rotation (X), an angular spacing between the locking projection (30; 30') and the securing projection (32; 32') of the locking detent (28; 28') is greater than twice an angular spacing or a double minimum angular spacing between directly adjacent teeth (1-10, 26; A-E) which serve as locking teeth, and is smaller than the angular spacing of the rotational positions of the toothed washer assembly (24; 24') which in each case correspond to the actuating positions of maximum extension and maximum retraction of the actuating cable (48).

9. Holding and release mechanism according to any of claims 6 to 8, **characterised in that** the plurality of teeth (1-9, A-E) of the toothed washer assembly (24') comprises a group of teeth which, depending on the rotational position of the toothed washer assembly (24'), serve both as locking teeth and as securing teeth, the toothed washer assembly (24') preferably having a toothed washer (24') which comprises the group of teeth.

10. Holding and release mechanism according to claim 9, **characterised in that,** with respect to the first axis of rotation (X), an angular spacing between the locking projection (30') and the securing projection (32') of the locking detent (28') is greater than an angular spacing or a minimum angular spacing between directly adjacent teeth (1-9, A-E) of the group of teeth which, depending on the rotational position of the toothed washer assembly (24'), serve both as locking teeth and as securing teeth.

11. Holding and release mechanism according to any of the preceding claims, **characterised in that** the locking detent (28; 28') is preloaded, by a spring assembly, in the direction of the first position.

12. Holding and release mechanism according to any of the preceding claims, **characterised in that** the toothed washer assembly (24; 24') or the cable uptake device (46) is preloaded, by a second spring assembly, in the extension direction of the actuating cable (48).

13. Holding and release mechanism according to any of the preceding claims, **characterised by** a rejection device (42) which is designed to remove the locking detent (28; 28') from its first pivot position, or keep it removed therefrom, in at least one predetermined rotational angle range of the toothed washer assembly (24; 24') of the at least one rotational position of the toothed washer assembly (24; 24') which corresponds to an actuating position of the actuating cable (48).

14. Holding and release mechanism according to claim 13, **characterised in that** the rejection device (42) comprises at least one cam element (42) which is integrally associated with the cable uptake device (46) or the toothed washer assembly (24; 24'), or is connected to one thereof for conjoint rotation, and is designed to act directly or by means of at least one further element (44) of the rejection device (42) on the locking detent (28; 28'), in order to remove said detent from its first pivot position or keep it removed therefrom.

15. Holding and release mechanism according to either claim 13 or claim 14, **characterised in that** the at least one predetermined rotational angle range of the toothed washer assembly (24; 24') includes the rotational position of the toothed washer assembly (24; 24') which corresponds to the actuating position of maximum extension of the actuating cable (48).

16. Holding and release mechanism according to any of the preceding claims, **characterised in that** the locking detent (28; 28') can be adjusted from the first position towards the second position, in order to release the actuating cable (48) in the extension direction, by at least one step, by means of an actuating device (40).

17. Holding and release mechanism according to any of the preceding claims, **characterised in that** the toothed washer assembly (24; 24') and thus the cable uptake device (46) of the switching mechanism can assume at least six, preferably at least eight, most preferably at least ten, different rotational positions, which are in each case associated with an actuating position of the actuating cable (48).

18. Step-switch, in particular for a bicycle, for actuating at least one device (50), for example a switching assembly which can be actuated for gear selection of a bicycle gear change, by means of an actuating cable (48), comprising a rotatable cable uptake device (46) which takes up the actuating cable (48) and which is rotatable between rotational positions which correspond to a plurality of actuating positions of the actuating cable (48), including an actuating position of maximum extension of the actuating cable (48) from the cable uptake device (46) and an actuating position of maximum retraction of the actuating cable (48) by the cable uptake device (46), the cable uptake device (46) being held, by means of a holding and release mechanism (29; 29') according to any of the preceding claims, in a plurality of first rotational positions of the cable uptake device (46), against rotation in a release direction, and being released, by means of the holding and release mechanism (29; 29'), for a rotation in the release direction, for stepped release of the actuating cable (46) in an extension direction.

19. Step-switch according to claim 18, **characterised by** a manually actuatable retraction mechanism (36) which acts directly or indirectly on the cable uptake device (48) and by means of which the cable uptake device (48) can be rotated, in a stepped manner, in a retraction direction which is opposite the release direction, between the rotational positions which correspond to the actuating positions of the actuating cable (46).

20. System comprising a step-switch (20; 20') according to either claim 18 or claim 19 and a device (50) which can be actuated by means of the step-switch (20; 20') and the actuating cable (46), **characterised in that** the device (50) comprises a return spring assembly (54) which preloads the actuating cable (46) in the direction of the actuating position of maximum extension.

21. System according to claim 20, **characterised in that** the actuating cable (46) is connected to a movably arranged element (52) of the device (50) which is preloaded, by the return spring assembly (54), in the direction of a preferably adjustable stop position which corresponds to the actuating position of maximum extension of the actuating cable (46) and in which no preload forces are exerted on the actuating cable (46) by the return spring assembly (54).

## Revendications

1. Mécanisme de maintien et de libération pour maintenir et libérer un dispositif de réception de câble (46), par exemple d'un télérupteur (20), par exemple pour une bicyclette, pour maintenir un câble d'actionnement (48) pouvant être reçu au moyen du dispositif de réception de câble (46) dans une pluralité de positions d'actionnement, comprenant une position d'actionnement d'extraction maximale du câble d'actionnement (48) du dispositif de réception de câble (46) et une position d'actionnement de rétraction maximale du câble d'actionnement (48) par le dispositif de réception de câble (46), et pour libérer pas à pas le câble d'actionnement (48) dans une direction d'extraction ; comprenant :
- un agencement de poulies dentée (24) appartenant d'un seul tenant au dispositif de réception de câble (46) ou relié ou pouvant être relié de manière solidaire en rotation à celui-ci, pouvant tourner avec celui-ci autour d'un premier axe (X), qui présente sur sa périphérie extérieure une pluralité de dents (1-10, 26) ;
- un cliquet d'arrêt (28) pouvant pivoter autour d'un deuxième axe (Y), qui, dans une première position de pivotement, lorsque l'agencement de poulies dentée (24) se trouve dans différentes premières positions de rotation, s'engage avec une saillie d'arrêt (30) avec une dent (1-10) de la pluralité de dents (1-10, 26), servant de dent d'arrêt et associée à la première position de rotation respective, pour maintenir ou arrêter l'agencement de poulies dentées (24) et donc le dispositif de réception de câble (46) dans la première position de rotation respective, et qui, dans une deuxième position de pivotement, lorsque l'agencement de poulies dentées (24) se trouve dans différentes deuxièmes positions de rotation, est pourvu d'une saillie de sécurité (32) avec une dent de la pluralité de dents (1-10, 26) associée à la deuxième position de rotation respective, servant de dent de sécurité, afin de maintenir ou d'arrêter l'agencement de poulies dentées (24) et ainsi le dispositif de réception de câble (46) dans la deuxième position de rotation respective, les premières positions de rotation correspondant aux positions d'actionnement du câble d'actionnement (48) ou à un sous-ensemble de ces positions d'actionnement, et les deuxièmes positions de rotation correspondant à des positions intermédiaires du câble d'actionnement (48) lors du transfert du câble d'actionnement (48) entre des positions adjacentes parmi les positions d'actionnement en libérant le câble d'actionnement (48) ;
**caractérisé en ce que** la pluralité de dents (1-10, 26) de l'agencement de poulies dentée (24) comprend un premier groupe de dents et un deuxième groupe de dents, les dents (1-10) du premier groupe de dents servant de dents de blocage et étant disposées dans un premier plan de dents orthogonal au premier axe (X) et les dents (26) du deuxième groupe de dents servant de dents de blocage et étant disposées dans un deuxième plan de dents orthogonal au premier axe (X), décalé par rapport au premier plan de dents, et **caractérisé en ce que** le premier axe (X) et le deuxième axe (Y) sont sensiblement parallèles entre eux.

2. Mécanisme de retenue et de libération selon la revendication 1, **caractérisé en ce que** le premier groupe de dents et le deuxième groupe de dents présentent chacun le même nombre de dents (1-10, 26), qui correspond de préférence au nombre de positions d'actionnement du câble d'actionnement (48).

3. Mécanisme de retenue et de libération selon l'une des revendications précédentes, **caractérisé en ce que** le cliquet d'arrêt (28) est configuré de telle sorte que la saillie d'arrêt (30) est disposée dans le premier plan de dents et la saillie de sécurité (32) dans le deuxième plan de dents.

4. Mécanisme de retenue et de libération selon l'une des revendications précédentes, **caractérisé en ce que** les dents (1-10) du premier groupe de dents s'étendent sur une première plage angulaire par rapport au premier axe de rotation (X), et les dents (26) du deuxième groupe de dents s'étendent sur une deuxième plage angulaire par rapport au premier axe de rotation (X), qui chevauche la première plage angulaire.

5. Mécanisme de retenue et de libération selon l'une des revendications précédentes, **caractérisé en ce que** l'agencement de poulies dentées (24) comprend deux poulies dentées (24a, 24b) solidaires en rotation l'une de l'autre, l'une comportant le premier groupe de dents et l'autre comportant le deuxième groupe de dents.

6. Mécanisme de retenue et de libération selon l'une des revendications 1 à 5, **caractérisé en ce qu'**aucune dent (1-10, 26 ; A-E) de la pluralité de dents servant de dent d'arrêt n'est associée à la position d'actionnement d'extraction maximale du câble d'actionnement (48), de sorte que l'agencement de poulies dentés (24 ; 24'), dans une position de rotation de l'agencement de poulies dentées (24 ; 24') et donc du dispositif de réception de câble (46) correspondant à la position d'actionnement d'extraction maximale du câble d'actionnement (48), n'est pas arrêté et maintenu par l'engagement de la saillie d'arrêt (30 ; 30') avec une dent (1-10, 26 ; A-E).

7. Mécanisme de retenue et de libération selon l'une des revendications 1 à 6, **caractérisé en ce que** l'agencement de poulies dentées (24 ; 24'), et donc le dispositif de réception de câble (46), passe directement d'une position de rotation correspondant à une position d'actionnement du câble d'actionnement (48) précédant la position d'actionnement d'extraction maximale du câble d'actionnement (48), à une/des position(s) de rotation de l'agencement de poulies dentées (24 ; 24') et donc du dispositif de réception de câble (46) par libération du câble d'actionnement (48), sans arrêter l'agencement de poulies dentées (24 ; 24') et donc le dispositif de réception de câble (46) à une position intermédiaire au moyen de la saillie de sécurité (32 ; 32') et d'une dent (26 ; 1-9, A-E) de la pluralité de dents servant de dent de sécurité.

8. Mécanisme de retenue et de libération selon l'une des revendications 1 à 7, **caractérisé en ce que**, par rapport au premier axe de rotation (X), une distance angulaire entre la saillie d'arrêt (30 ; 30') et la saillie de sécurité (32 ; 32') du cliquet d'arrêt (28 ; 28') est supérieure à une distance angulaire double ou à une distance angulaire minimale double entre des dents directement voisines (1-10, 26 ; A-E), qui servent de dents d'arrêt, et est inférieur à l'écart angulaire des positions de rotation de l'agencement de poulies dentés (24 ; 24'), qui correspondent respectivement aux positions d'actionnement d'extraction maximale et de rétraction maximale du câble d'actionnement (48).

9. Mécanisme de retenue et de libération selon l'une des revendications 6 à 8, **caractérisé en ce que** la pluralité de dents (1-9, A-E) de l'agencement de poulies dentées (24') présente un groupe de dents servant à la fois de dents d'arrêt et de dents de sécurité en fonction de la position de rotation de l'agencement de poulies dentées (24'), l'agencement de poulies dentées (24') comprenant de préférence une poulie dentée (24') présentant ledit groupe de dents.

10. Mécanisme de retenue et de libération selon la revendication 9, **caractérisé en ce que**, par rapport au premier axe de rotation (X), une distance angulaire entre la saillie d'arrêt (30') et la saillie de sécurité (32') du cliquet d'arrêt (28') est supérieure à une distance angulaire ou à une distance angulaire minimale entre des dents directement voisines (1 -9, A-E) du groupe de dents qui servent aussi bien de dents d'arrêt que de dents de sécurité en fonction de la position de rotation de l'agencement de poulies dentés (24').

11. Mécanisme de retenue et de libération selon l'une des revendications précédentes, **caractérisé en ce que** le cliquet d'arrêt (28 ; 28') est précontraint dans la direction de la première position par un premier dispositif à ressort.

12. Mécanisme de retenue et de libération selon l'une des revendications précédentes, **caractérisé en ce que** l'agencement de poulies dentée (24 ; 24') ou le dispositif de réception de câble (46) est précontraint par un deuxième agencement de ressort dans la direction d'extraction du câble d'actionnement (48).

13. Mécanisme de retenue et de libération selon l'une des revendications précédentes, **caractérisé par** un dispositif de commande (42) adapté pour, dans au moins une plage angulaire de rotation prédéterminée de l'agencement de poulies dentées (24 ; 24') comprenant au moins une position de rotation de l'agencement de poulies dentées (24 ; 24') correspondant à une position d'actionnement du câble d'actionnement (48), éloigner ou maintenir éloigné le cliquet d'arrêt (28 ; 28') de sa première position de pivotement.

14. Mécanisme de retenue et de libération selon la revendication 13, **caractérisé en ce que** le dispositif de commande (42) comprend au moins un élément de came (42) appartenant d'un seul tenant au dispositif de réception de câble (46) ou à l'agencement de poulies dentées (24 ; 24') ou solidaire en rotation de l'un d'entre eux, et adapté pour agir directement ou par l'intermédiaire d'au moins un autre élément (44) du dispositif de commande (42) sur le cliquet d'arrêt (28 ; 28') pour l'écarter ou le maintenir écarté de sa première position de pivotement.

15. Mécanisme de retenue et de libération selon la revendication 13 ou 14, **caractérisé en ce que** ladite au moins une plage angulaire de rotation prédéterminée de l'agencement de poulies dentées (24 ; 24') comprend la position de rotation de l'agencement de poulies dentées (24 ; 24') correspondant à la position d'actionnement d'extraction maximale du câble d'actionnement (48).

16. Mécanisme de retenue et de libération selon l'une des revendications précédentes, **caractérisé en ce que** le cliquet d'arrêt (28 ; 28') pour libérer le câble d'actionnement (48) dans la direction d'extraction est déplaçable d'au moins un pas au moyen d'un dispositif d'actionnement (40) depuis la première position vers la deuxième position.

17. Mécanisme de retenue et de libération selon l'une des revendications précédentes, **caractérisé en ce que** l'agencement de poulies dentées (24 ; 24') et donc le dispositif de réception de câble (46) du mécanisme de commutation peut prendre au moins six, de préférence au moins huit, de préférence au moins dix positions de rotation différentes, qui sont chacune associées à une position d'actionnement du câble d'actionnement (48).

18. Télérupteur, en particulier pour une bicyclette, pour l'actionnement d'au moins un dispositif (50), par exemple un dispositif de changement de vitesse pouvant être actionné pour la sélection d'un changement de vitesse de bicyclette, au moyen d'un câble d'actionnement (48), comprenant un dispositif de réception de câble (46) rotatif, recevant le câble d'actionnement (48), qui peut tourner entre des positions de rotation, correspondant à une pluralité de positions d'actionnement du câble d'actionnement (48), comprenant une position d'actionnement d'extraction maximale du câble d'actionnement (48) du dispositif de réception de câble (46) et une position d'actionnement de rétraction maximale du câble d'actionnement (48) par le dispositif de réception de câble (46), le dispositif de réception de câble (46) étant actionné au moyen d'un mécanisme de retenue et de libération (29 ; 29') selon l'une des revendications précédentes est maintenu dans une pluralité de premières positions de rotation du dispositif de réception de câble (46) pour empêcher sa rotation dans une direction de libération et est libéré pour une rotation dans la direction de libération au moyen du mécanisme de retenue et de libération (29 ; 29') pour libérer progressivement le câble d'actionnement (46) dans une direction d'extraction.

19. Télérupteur selon la revendication 18, **caractérisé par** un mécanisme de rétraction (36) actionnable manuellement et agissant directement ou indirectement sur le dispositif de réception de câble (48), au moyen duquel le dispositif de réception de câble (48) peut être tourné pas à pas dans une direction de rétraction opposée à la direction de libération entre les positions de rotation correspondant aux positions d'actionnement du câble d'actionnement (46).

20. Système comprenant un télérupteur (20 ; 20') selon la revendication 18 ou 19 et un dispositif (50) actionnable au moyen du télérupteur (20 ; 20') et du câble d'actionnement (46), **caractérisé en ce que** le dispositif (50) comprend un agencement de ressort de rappel (54) sollicitant le câble d'actionnement (46) vers la position d'actionnement d'extraction maximale.

21. Système selon la revendication 20, **caractérisé en ce que** le câble d'actionnement (46) est relié à un élément (52) du dispositif (50) disposé de manière mobile, qui est précontraint par l'agencement de ressort de rappel (54) en direction d'une position de butée de préférence ajustable, qui correspond à la position d'actionnement d'extraction maximale du câble d'actionnement (46) et dans laquelle aucune force de précontrainte n'est exercée sur le câble d'actionnement (46) par l'agencement de ressort de rappel (54).
